# DEMANDE DE BREVET EUROPEEN

(11) **EP 4 321 323 A1**
(43) Date de publication de la demande: **14.02.2024**
(21) Numéro de dépôt: 23189369.4
(22) Date de dépôt: 03.08.2023
(51) Int. Cl.: B29C 48/515, B29C 48/66, B29C 48/34, B29C 48/154, B29C 48/285, H01B 13/32, B29C 48/21

(54) **EXTRUDEUSE POUR L'EXTRUSION D'UNE COUCHE ÉLECTRIQUEMENT ISOLANTE COMPRENANT UNE VIS D'EXTRUSION AYANT UN CANAL D'INJECTION DE LIQUIDE**

(30) Priorité: 08.08.2022 FR 2208176
(71) Demandeur: Nexans, 92400 Courbevoie (FR)
(72) Inventeur: SADIK, Tarik, 38670 Chasse-sur-Rhône (FR); PUISSANT, Stephan, 69007 Lyon (FR); CACCIOTTI, Mauro, 04100 Latina (IT); LUTON, Marie-Hélène, 92400 Courbevoie (FR); PEREGO, Gabriele, 20144 Milan (IT)
(74) Mandataire: Ipsilon

(57) **Abrégé**

L'invention concerne une extrudeuse (5) pour l'extrusion d'un câble électrique comprenant au moins un élément électriquement conducteur allongé et au moins une couche thermoplastique extrudée entourant ledit élément électriquement conducteur allongé, ladite extrudeuse comprenant :
- un organe d'alimentation (4) en polymère sous forme solide,
- un fourreau (6) alimenté par l'organe d'alimentation,
- une vis d'extrusion (7) disposée à l'intérieur du fourreau (6) et permettant la fusion progressive du polymère pour former une composition d'extrusion et le transport de cette composition le long de la vis d'extrusion (7) jusqu'à une extrémité distale (21) de la vis d'extrusion (7), ladite vis d'extrusion (7) s'étendant le long d'un axe longitudinal (A), ladite vis d'extrusion comprenant une zone barrière ayant au moins deux filets,
- une tête d'extrusion (8) disposée au niveau d'une extrémité distale (21) de la vis d'extrusion (7) et configurée pour appliquer la composition autour d'un élément électriquement conducteur allongé,
dans laquelle au moins un canal d'injection (22) de liquide est formé dans la vis d'extrusion (7), ledit au moins un canal d'injection (22) débouchant à l'intérieur du fourreau (7) au niveau d'au moins un orifice de sortie (30) formé sur une surface extérieure de la vis d'extrusion (7).

## Description

### Domaine technique

La présente invention concerne une extrudeuse pour l'extrusion d'un câble électrique, notamment du type câble d'énergie, comprenant une couche thermoplastique extrudée autour d'au moins un élément électriquement conducteur allongé. L'invention propose également un procédé de fabrication d'un câble électrique avec une telle extrudeuse.

Elle s'applique typiquement mais non exclusivement aux câbles électriques destinés au transport d'énergie, notamment aux câbles d'énergie à moyenne tension (notamment de 6 à 45-60 kV) ou à haute tension (notamment supérieure à 60 kV, et pouvant aller jusqu'à 400 kV), qu'ils soient en courant continu ou alternatif, dans les domaines du transport d'électricité aérien, sous-marin, terrestre, ou encore de l'aéronautique.

Un câble de transport d'énergie à moyenne ou à haute tension comprend généralement de l'intérieur vers l'extérieur :
- un élément électriquement conducteur allongé, notamment en cuivre ou en aluminium ;
- une couche semi-conductrice interne entourant ledit élément électriquement conducteur allongé ;
- une couche électriquement isolante entourant ladite couche semi-conductrice interne ;
- une couche semi-conductrice externe entourant ladite couche isolante ; et
- éventuellement une gaine de protection électriquement isolante entourant ladite couche semi-conductrice externe.

### Arrière-plan technologique

La composition extrudée formant la couche électriquement isolante peut nécessiter l'addition d'un liquide au polymère thermoplastique. Il est connu d'injecter ce liquide avant d'insérer le polymère thermoplastique dans le fourreau. Le liquide est ainsi mélangé avec le polymère thermoplastique avant ou au moment de son insertion dans le fourreau, notamment au niveau d'une trémie. Il a toutefois été observé que cette méthode d'injection du liquide pouvait entrainer des défauts de fabrication de la couche électriquement isolante, liés notamment à un phénomène de glissement. Ce phénomène de glissement à la paroi lié à l'effet lubrifiant du liquide diélectrique (bien connu sous l'anglicisme « slippage/sliding phenomenon ») peut entrainer une dégradation des propriétés mécaniques et/ou électriques de la couche thermoplastique obtenue en tête d'extrusion (défauts structuraux de la couche), notamment une variation du diamètre du câble.

Une solution connue du document WO 02/47092 A1 consiste à prévoir des trous formés au travers du fourreau de l'extrudeuse pour injecter un liquide entre la vis d'extrusion et le fourreau, au contact du polymère thermoplastique à l'état fondu. Une telle solution a pour inconvénient, pour les extrudeuse existantes, de nécessiter le perçage du fourreau et notamment de sa surface interne. Or, ces perçages détériorent le traitement de surface réalisé sur cette surface interne du fourreau. L'injection du liquide dans une zone du fourreau où le polymère est à l'état fondu oblige également à prendre en compte une pression plus élevée qu'au niveau d'une zone où le polymère est à l'état solide ou partiellement solide.

Il existe donc un besoin pour une configuration d'extrudeuse permettant une injection d'un liquide au contact du polymère thermoplastique sans risquer un endommagement de la surface interne du fourreau.

### Résumé de l'invention

Pour cela, l'invention propose une extrudeuse pour l'extrusion d'un câble électrique comprenant au moins un élément électriquement conducteur allongé et au moins une couche thermoplastique extrudée entourant ledit élément électriquement conducteur allongé, ladite extrudeuse comprenant :
- un organe d'alimentation en polymère sous forme solide,
- un fourreau alimenté par l'organe d'alimentation,
- une vis d'extrusion disposée à l'intérieur du fourreau et permettant la fusion progressive du polymère pour former une composition d'extrusion et le transport de cette composition le long de la vis d'extrusion jusqu'à une extrémité distale de la vis d'extrusion , ladite vis d'extrusion s'étendant le long d'un axe longitudinal, ladite vis d'extrusion comprenant une zone barrière ayant au moins deux filets,
- une tête d'extrusion disposée au niveau d'une extrémité distale de la vis d'extrusion au niveau de la zone de pompage et configurée pour appliquer la composition autour d'un élément électriquement conducteur allongé,
dans laquelle au moins un canal d'injection de liquide est formé dans la vis d'extrusion, ledit au moins un canal d'injection débouchant à l'intérieur du fourreau au niveau d'au moins un orifice de sortie formé sur une surface extérieure de la vis d'extrusion.

L'injection d'un liquide au travers de la vis d'extrusion permet de s'affranchir du besoin de percer le fourreau et donc de la détérioration du traitement de surface de la surface interne du fourreau.

Selon un mode de réalisation de l'extrudeuse, ledit au moins un orifice de sortie débouche en amont de la zone barrière, entre l'organe d'alimentation et la zone barrière. Ceci permet d'injecter le liquide dans une zone où la pression à l'intérieur du fourreau est plus favorable.

Selon un mode de réalisation de l'extrudeuse, la zone barrière de la vis d'extrusion débute à une distance séparant la zone barrière de l'organe d'alimentation, en projection sur l'axe longitudinal, supérieure ou égale à 8D.

Selon un mode de réalisation de l'extrudeuse, la distance séparant la zone barrière de l'organe d'alimentation, en projection sur l'axe longitudinal, est définie entre 8D et 12D.

Selon un mode de réalisation de l'extrudeuse, l'orifice de sortie du canal d'injection est disposé dans une zone débutant à une distance égale ou supérieure à 4D et se finissant à une distance égale ou inférieure à 8D ou 12D. Ces distances sont prises en référence à l'organe d'alimentation, le long de l'axe longitudinal A.

Selon un mode de réalisation de l'extrudeuse, ladite vis d'extrusion est une vis barrière comprenant une zone d'alimentation au niveau de laquelle le polymère est sous forme solide lorsque l'extrudeuse est en fonctionnement et au moins une zone intermédiaire au niveau de laquelle le polymère est partiellement solide ou à l'état fondu lorsque l'extrudeuse est en fonctionnement, ledit au moins un orifice de sortie débouchant au niveau de ladite au moins une zones intermédiaire. De manière alternative, ledit au moins un orifice peut déboucher au niveau de la zone d'alimentation ou bien au niveau d'une zone de la vis d'extrusion où le polymère est à l'état fondu.

Selon un mode de réalisation de l'extrudeuse, ledit au moins un canal d'injection est conformé de sorte que la distance séparant ledit au moins un orifice de sortie de l'organe d'alimentation, en projection sur l'axe longitudinal, est supérieure ou égale à 3D, D étant le diamètre nominal de la vis d'extrusion. A cette distance de 3D, le polymère est généralement à l'état complètement solide.

Selon un mode de réalisation de l'extrudeuse, ledit au moins un canal d'injection est conformé de sorte que la distance séparant ledit au moins un orifice de sortie de l'organe d'alimentation, en projection sur l'axe longitudinal, est supérieure ou égale à 4D. A cette distance de 4D, le polymère est à l'état partiellement fondu et partiellement solide.

Selon un mode de réalisation de l'extrudeuse, ledit au moins canal d'injection comprend au moins un orifice d'entrée formé au niveau d'une extrémité d'alimentation de la vis d'extrusion opposée à l'extrémité d'extrusion, ledit au moins un canal d'injection s'étendant à l'intérieur de ladite vis d'extrusion entre ledit au moins un orifice d'entrée et ledit au moins un orifice de sortie.

Il est ainsi possible de connecter une pompe à la vis d'extrusion, en particulier à l'orifice d'entrée, pour alimenter ledit au moins un canal d'injection en liquide.

Selon un mode de réalisation de l'extrudeuse, ledit au moins un canal d'injection comprend au moins une première portion de canal s'étendant principalement le long de l'axe longitudinal au niveau d'une portion centrale de la vis d'extrusion et au moins une deuxième portion de canal s'étendant transversalement à l'axe longitudinal depuis ladite au moins une première portion de canal et ledit au moins un orifice de sortie.

Selon un mode de réalisation de l'extrudeuse, ledit au moins un canal d'injection comprend une pluralité d'orifices de sortie réparties autour de la vis d'extrusion.

Selon un mode de réalisation de l'extrudeuse, les orifices de sortie sont équirépartis autour de la vis d'extrusion.

Selon un mode de réalisation de l'extrudeuse, les orifices de sortie sont positionnés dans un même plan perpendiculaire à l'axe longitudinal.

Selon un mode de réalisation de l'extrudeuse, la pluralité d'orifices de sortie comprend un nombre paire d'orifices de sortie, ladite au moins une deuxième portion de canal étant réalisée par un seul perçage s'étendant entre deux orifices de sortie diamétralement opposés.

Selon un mode de réalisation de l'extrudeuse, la vis d'extrusion comprend un corps allongé et au moins un filet s'étendant autour et le long dudit corps allongé, ledit au moins un orifice de sortie débouchant au niveau d'une surface extérieure du corps allongé.

L'invention concerne également un procédé de fabrication d'un câble électrique comprenant au moins un élément électriquement conducteur allongé et au moins une couche thermoplastique extrudée entourant ledit élément électriquement conducteur allongé, ledit procédé mettant en oeuvre une extrudeuse telle que décrite ci-avant, caractérisé en ce qu'il comprend au moins les étapes suivantes :
i) une étape d'introduction d'une composition comprenant au moins un polymère thermoplastique sous forme solide dans une zone de la vis d'extrusion, dénommée zone d'alimentation, et située à l'entrée de l'extrudeuse,
ii) une étape au cours de laquelle la composition issue de l'étape i) est amenée de la zone d'alimentation vers une ou plusieurs zones intermédiaires de la vis d'extrusion permettant le transport de la composition vers la tête d'extrusion située à la sortie de l'extrudeuse et la fusion graduelle du polymère thermoplastique,
iii) une étape d'application au niveau de la tête de l'extrudeuse de la composition issue de l'étape ii) autour de l'élément électriquement conducteur allongé,
dans lequel au moins un liquide est injecté entre le fourreau et la vis d'extrusion au travers dudit au moins un canal d'injection formé dans la vis d'extrusion.

Selon un mode de réalisation du procédé de fabrication, ledit au moins un polymère thermoplastique sous forme solide est choisi parmi un homopolymère de propylène et un copolymère de propylène, le liquide étant un liquide diélectrique.

### Brève description des figures

La description qui va suivre en regard des dessins annexés, donnés à titre d'exemples non limitatifs, fera bien comprendre en quoi consiste l'invention et comment elle peut être réalisée. Sur les figures annexées :

[fig. 1] La figure 1 représente schématiquement une vue partiellement en coupe d'une extrudeuse comprenant notamment une vis d'extrusion et un fourreau.

[fig. 2] La figure 2 représente schématiquement une vue partiellement en coupe et en perspective d'un câble électrique obtenu avec l'extrudeuse de la figure 1.

[fig. 3] La figure 3 représente schématiquement une vue partiellement en coupe d'une extrudeuse selon l'invention dans laquelle un canal d'injection d'un liquide est formé au travers de la vis d'extrusion pour injecter un liquide entre le fourreau et la vis d'extrusion, le canal d'injection comprenant une première portion de canal longitudinale et une deuxième portion de canal transversale.

[fig. 4] La figure 4 une vue de face de la vis d'extrusion de la figure 3 mettant en évidence la deuxième portion de canal transversale du canal d'injection.

### Description de mode(s) de réalisation

Pour des raisons de clarté, seuls les éléments essentiels pour la compréhension de l'invention ont été représentés de manière schématique sur ces figures, et ceci sans respect de l'échelle.

Le concept de l'invention est décrit plus complètement ci-après avec référence aux dessins joints, sur lesquels des modes de réalisation du concept de l'invention sont montrés. Sur les dessins, la taille et les tailles relatives des éléments peuvent être exagérées à des fins de clarté. Des numéros similaires font référence à des éléments similaires sur tous les dessins. Cependant, ce concept de l'invention peut être mis en oeuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier.

Une référence dans toute la spécification à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation. De plus, le terme « comprenant » n'exclut pas d'autres éléments ou étapes.

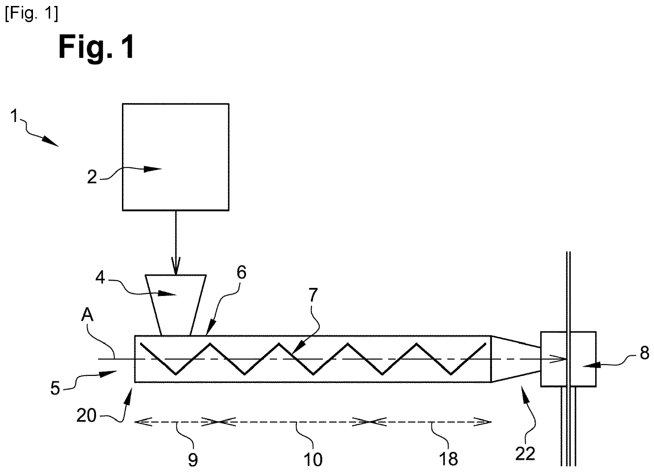

Sur la figure 1, le dispositif 1 comprend un container 2 pouvant être alimenté par des granulés d'un polymère thermoplastique, une trémie d'alimentation 4 pouvant être alimentée à température ambiante par les granulés du polymère thermoplastique contenues dans le container 2 et une extrudeuse 5 comprenant par exemple un fourreau 6, une vis d'extrusion 7 et une tête d'extrusion 8.

Le fourreau 6 forme une cavité interne dans laquelle est disposée la vis d'extrusion 7. Le fourreau 6 est alimenté en polymère thermoplastique par un organe d'alimentation, ici la trémie d'alimentation 4.

Le polymère thermoplastique sous forme solide peut être une polyoléfine réticulée telle qu'un polyéthylène réticulé (XLPE), un élastomère réticulé d'éthylène-propylène ou d'éthylène propylène-diène. Selon une application particulière, le polymère thermoplastique comprend un thermoplastique à base de propylène comme un homopolymère de propylène ou un copolymère de propylène.

La vis d'extrusion 7 s'étend le long d'un axe longitudinal A. La vis d'extrusion 7 est configurée pour être déplacée en rotation autour de l'axe longitudinal A. la vis d'extrusion 7 comprend au moins un filet s'étendant autour et le long dudit corps allongé 24.

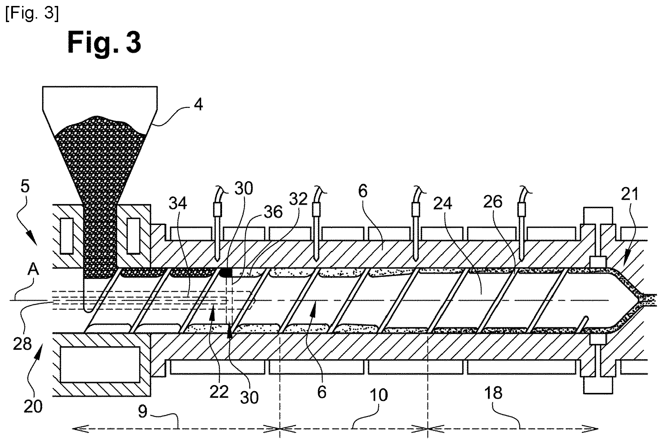

La vis d'extrusion 7 comprend un corps allongé 24 et au moins un filet 26 (voir figure 3). La vis d'extrusion 7 permet de générer de la pression en bout de vis d'extrusion 7, le transport du polymère thermoplastique et, de manière optionnelle, son mélangeage jusqu'à la tête d'extrusion 8 où la composition formée par le polymère thermoplastique fondu est appliquée autour d'un élément électriquement conducteur allongé.

L'extrudeuse 5 peut être une extrudeuse à vis unique tel qu'illustré en figure 1.

La vis d'extrusion 7 est de préférence une vis barrière ou vis à profil barrière, i.e. une vis comprenant une zone dénommée « zone barrière ». Cette zone barrière comprend en particulier un filet secondaire avec un pas légèrement supérieur (balayant progressivement la largeur du chenal) qui permet de séparer le polymère fondu du polymère encore solide, comme s'il matérialisait la frontière entre les deux phases. Elle permet ainsi une compression du lit solide et par conséquent une amélioration de la capacité de fusion de la vis.

La zone barrière comprend ainsi un filet principal et un filet secondaire s'étendant autour du corps allongé 24 de la vis d'extrusion 7 le long de l'axe longitudinal A. Le filet secondaire présente un pas supérieur au filet principal de sorte que la distance séparant les filets principal et secondaire varie le long de l'axe longitudinal A.

La zone barrière de la vis d'extrusion 7 est disposée à une distance entre 8D et 12D à partir de l'organe d'alimentation 4, le long de l'axe longitudinal A. Cette zone barrière s'étend sur une distance entre 4D et 6D.

Ces vis barrière comportent une zone d'alimentation 9 située au niveau d'une extrémité proximale 20 de la vis d'extrusion 7 destinée à être disposée au niveau de l'alimentation de la vis d'extrusion 7, e.g. de la trémie d'alimentation 4. Cette zone d'alimentation est suivie d'une zone barrière ou intermédiaire 10 permettant la fusion graduelle du polymère et le transport vers la sortie de l'extrudeuse assuré par une zone terminale de la vis dite zone de pompage 18. Cette zone de pompage peut avoir une longueur d'au moins 2 fois le diamètre de la vis d'extrusion. La zone barrière ou intermédiaire 10 s'étend jusqu'à la zone de pompage de la vis d'extrusion. La composition sortant de la zone barrière ou intermédiaire 10 après un passage dans la zone de pompage 18 est directement transportée dans la tête de l'extrudeuse 8 pour être appliquée autour de l'élément électriquement conducteur allongé. La vis d'extrusion 7 comprend également une extrémité distale 21 disposée à l'opposé de l'extrémité proximale 20.

Un fourreau 6 spécifique (i.e. fourreau rainuré) peut être utilisé. Ceci permet, en particulier en combinaison avec une vis barrière, d'obtenir une composition homogène facile à extruder, tout en évitant ou limitant la formation de défauts de structure dans la couche thermoplastique obtenue, notamment du type couche électriquement isolante.

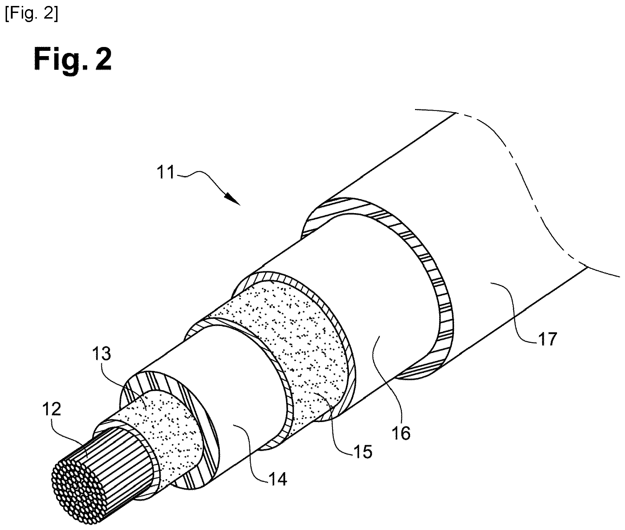

Sur la figure 2, le câble d'énergie 11 à moyenne ou haute tension obtenu selon le procédé de l'invention, comprend un élément électriquement conducteur allongé central 12, notamment en cuivre ou en aluminium, et, successivement et coaxialement comprend autour de cet élément 12, une première couche semi-conductrice 13 dite « couche semi-conductrice interne », une couche électriquement isolante 14, une deuxième couche semi conductrice 15 dite « couche semi-conductrice externe », un écran métallique 16 du type tube cylindrique, et une gaine extérieure de protection 17.

Les couches 13 et 15 sont des couches extrudées par des procédés bien connus de l'homme du métier.

La présence de l'écran métallique 16 et de la gaine extérieure de protection 17 est préférentielle, mais non essentielle.

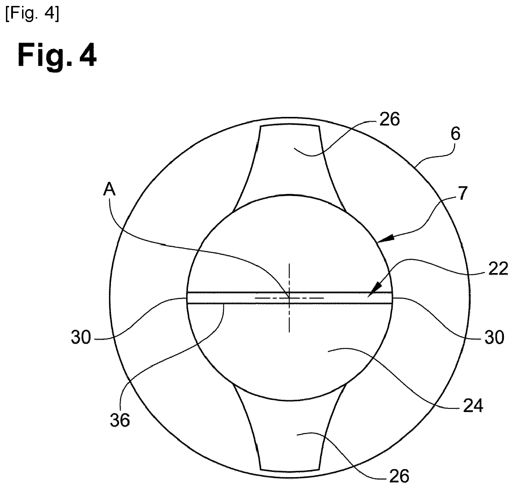

En référence aux figures 3 et 4, la vis d'extrusion 7 comprend un canal d'injection 22 de liquide à l'intérieur du fourreau 6. Le canal d'injection 22 est formé dans la vis d'extrusion 7. En particulier, le canal d'injection 22 est formé dans le corps allongé 24 de la vis d'extrusion 7.

Le liquide peut être un liquide diélectrique, un liquide réactif, un liquide aréactif, un cocktail silane. Le liquide peut comprendre en outre des antioxydants ou bien encore du lubrifiant.

Le canal d'injection 22 s'étend à l'intérieur de la vis d'extrusion 7 entre un orifice d'entrée 28 et un orifice de sortie 30.

L'orifice d'entrée 28 permet l'alimentation du canal d'injection 22 en liquide. L'orifice d'entrée 28 est de préférence formé au niveau de l'extrémité proximale 20 de la vis d'extrusion 7 de manière à faciliter l'accès au canal d'injection 22. Ainsi, l'orifice d'entrée 28 est de préférence formé dans un plan perpendiculaire à l'axe longitudinal A. Un dispositif de connexion à un organe d'alimentation en liquide peut être fixé à l'orifice d'entrée 28.

Une pluralité d'orifices d'entrée 28 peut être prévue, par exemple pour injecter un liquide à partir de plusieurs sources distinctes ou bien pour réaliser une injection de liquides différents. Il est également possible de prévoir une pluralité de canaux d'injection 22 de sorte que la vis d'extrusion 7 comporte une pluralité d'orifices d'entrée 28. De manière alternative, il est également possible qu'un même orifice d'entrée 28 alimente en liquide une pluralité de canaux d'injection 22.

L'orifice de sortie 30 débouche à l'intérieur du fourreau 6 de manière à injecter le liquide entre le fourreau 6 et la vis d'extrusion 7. Le liquide peut ainsi être injecté en aval de la zone d'alimentation 9 en polymère thermoplastique. Le phénomène de glissement peut ainsi être évité.

L'orifice de sortie 30 peut être formé à une distance prédéterminé de l'organe d'alimentation ou trémie d'alimentation 4, notamment le long de l'axe longitudinal A. Ainsi, le canal d'injection 22 peut être conformé de sorte que la distance séparant l'orifice de sortie 30 de l'organe d'alimentation 4, en projection sur l'axe longitudinal A, est supérieure ou égale à 3D. D est le diamètre nominal de la vis d'extrusion. Ce positionnement de l'orifice de sortie 30 permet d'injecter le liquide à une distance suffisante pour limiter, voire éviter, le phénomène de glissement.

L'orifice de sortie 30 peut être disposé dans une zone de la vis d'extrusion 7 au niveau de laquelle le polymère thermoplastique est à l'état solide, i.e. non encore fondu, de manière à limiter les contraintes liées à la pression de la composition. Dans ce cas, l'orifice de sortie 30 débouche au niveau de la zone d'alimentation 9.

De manière alternative, l'orifice de sortie 30 peut être disposé dans une zone de la vis d'extrusion 7 au niveau de laquelle le polymère est partiellement fondu et partiellement solide. Dans ce cas, l'orifice de sortie 30 débouche au niveau de la zone barrière ou intermédiaire 10.

De manière alternative, l'orifice de sortie 30 peut être disposé dans une zone de la vis d'extrusion 7 au niveau de laquelle le polymère est à l'état fondu. Dans ce cas, l'orifice de sortie 30 débouche au niveau de la zone de pompage 18.

Les différentes positions de l'orifice de sortie 30 mentionnées ci-avant peuvent en outre être combinées en prévoyant une pluralité d'orifices de sortie 30 débouchant à des positions différentes le long de la vis d'extrusion 7.

L'orifice de sortie 30 est formé sur et débouche au niveau d'une surface extérieure de la vis d'extrusion 7. En particulier, L'orifice de sortie 30 est formé sur et débouche au niveau d'une surface extérieure 32 du corps allongé 24.

Le canal d'injection 22 comprend une première portion de canal 34 s'étendant principalement le long de l'axe longitudinal A. Cette première portion de canal 34 s'étend de préférence au niveau d'une portion centrale de la vis d'extrusion 7. Le canal d'injection 22 comprend également une deuxième portion de canal 36 s'étendant transversalement à l'axe longitudinal A entre ladite au moins une première portion de canal 34 et l'orifice de sortie 30. Cette deuxième portion de canal 36 s'étend ainsi de préférence de manière radiale par rapport à une section circulaire de la vis d'extrusion 7.

Selon un mode de réalisation préféré, le canal d'injection 22 comprend une pluralité d'orifices de sortie 32 réparties autour de la vis d'extrusion 7. Ainsi, un même canal d'extrusion 22 permet d'injecter un liquide au niveau de plusieurs points d'injection de manière à obtenir une meilleure diffusion du liquide.

De manière préférée, les orifices de sortie 32 sont équirépartis autour de la vis d'extrusion 7. En d'autres termes, l'angle séparant deux orifices de sortie 32 consécutif est identique. A titre d'exemple, les orifices de sortie 32 sont séparés d'un angle de 180° lorsqu'il y a deux orifices de sorties 32, d'un angle de 120° lorsqu'il y a trois orifices de sortie 32 ou bien encor d'un angle de 90° lorsqu'il y a quatre orifices de sortie 30.

Pour permettre une injection au niveau d'une même position longitudinale, les orifices de sortie 30 sont de préférence positionnés dans un même plan perpendiculaire à l'axe longitudinal A. Ainsi, il est possible d'injecter le liquide tout autour de la vis d'extrusion 7.

Pour faciliter la fabrication du canal d'injection 22, la pluralité d'orifices de sortie 30 comprend de préférence un nombre paire d'orifices de sortie 30. La pluralité d'orifices de sortie 30 peut donc par exemple comprendre 2, 4, 6 ou 8 orifices de sorties 28. Ainsi, il est possible de réaliser la deuxième portion de canal 36 par un seul perçage s'étendant entre deux orifices de sortie 30 diamétralement opposés. Une telle configuration est par exemple illustrée sur les figures 3 et 4.

Lorsque la deuxième portion de canal 36 s'étend entre deux orifices de sortie 30, la première portion de canal 34 communique de préférence avec la deuxième portion de canal 36 au niveau d'une portion centrale de cette deuxième portion de canal 36. Le canal d'injection 22 a donc principalement la forme d'un T, avec les première 34 et deuxième 36 portions de canal formant respectivement les barres inférieure et supérieure de ce T.

La vis d'extrusion 7 peut également comprendre un canal de refroidissement (non illustré) s'étendant à l'intérieur du corps allongé 24. Un liquide de refroidissement, par exemple de l'eau, peut être mis en circulation à l'intérieur de ce canal de refroidissement. Ce liquide de refroidissement n'est pas destiné à être injecté au contact du polymère thermoplastique. Ainsi, ce canal de refroidissement est en boucle fermée à l'intérieur de la vis d'extrusion. En d'autres termes, le canal de refroidissement ne comprend pas d'orifice débouchant à l'intérieur du fourreau 6.

L'invention prévoit également un procédé de fabrication d'un câble électrique comprenant au moins un élément électriquement conducteur allongé et au moins une couche thermoplastique extrudée entourant ledit élément électriquement conducteur allongé. Cette couche thermoplastique est extrudée à l'aide d'une extrudeuse 5 telle que décrite ci-avant.

Lors d'une première étape i), une composition comprenant au moins un polymère thermoplastique sous forme solide est introduite dans une zone de la vis d'extrusion, dénommée zone d'alimentation, et située à l'entrée de l'extrudeuse.

Lors d'une deuxième étape ii), la composition issue de l'étape i) est amenée de la zone d'alimentation vers une ou plusieurs zones intermédiaires de la vis d'extrusion 7 permettant le transport de la composition vers la tête d'extrusion 8 et la fusion graduelle du polymère thermoplastique.

Une troisième étape iii) consiste à appliquer au niveau de la tête de l'extrudeuse 8 la composition issue de la deuxième étape ii) autour de l'élément électriquement conducteur allongé.

Lors du procédé, au moins un liquide est injecté entre le fourreau 6 et la vis d'extrusion 7 au travers du canal d'injection 22.

## Revendications

1. Extrudeuse (5) pour l'extrusion d'un câble électrique (11) comprenant au moins un élément électriquement conducteur allongé (12) et au moins une couche thermoplastique (14) extrudée entourant ledit élément électriquement conducteur allongé, ladite extrudeuse comprenant :
- un organe d'alimentation (4) en polymère sous forme solide,
- un fourreau (6) alimenté par l'organe d'alimentation,
- une vis d'extrusion (7) disposée à l'intérieur du fourreau (6) et permettant la fusion progressive du polymère pour former une composition d'extrusion et le transport de cette composition le long de la vis d'extrusion (7) jusqu'à une extrémité distale (21) de la vis d'extrusion (7), ladite vis d'extrusion (7) s'étendant le long d'un axe longitudinal (A), ladite vis d'extrusion comprenant une zone barrière ayant au moins deux filets,
- une tête d'extrusion (8) disposée au niveau d'une extrémité distale (21) de la vis d'extrusion (7) et configurée pour appliquer la composition autour d'un élément électriquement conducteur allongé,
dans laquelle au moins un canal d'injection (22) de liquide est formé dans la vis d'extrusion (7), ledit au moins un canal d'injection (22) débouchant à l'intérieur du fourreau (7) au niveau d'au moins un orifice de sortie (30) formé sur une surface extérieure de la vis d'extrusion (7).

2. Extrudeuse (5) selon la revendication 1, dans laquelle ledit au moins un orifice de sortie (30) débouche en amont de la zone barrière, entre l'organe d'alimentation (4) et la zone barrière.

3. Extrudeuse (5) selon la revendication 1 ou 2, dans laquelle la zone barrière de la vis d'extrusion (7) débute à une distance séparant la zone barrière de l'organe d'alimentation (4), en projection sur l'axe longitudinal, supérieure ou égale à 8D.

4. Extrudeuse (5) selon la revendication 3, dans laquelle la distance séparant la zone barrière de l'organe d'alimentation (4), en projection sur l'axe longitudinal, est définie entre 8D et 12D.

5. Extrudeuse selon l'une quelconque des revendications précédentes, dans laquelle ledit au moins un canal d'injection (22) est conformé de sorte que la distance séparant ledit au moins un orifice de sortie (30) de l'organe d'alimentation (4), en projection sur l'axe longitudinal, est supérieure ou égale à 3D, D étant le diamètre nominal de la vis d'extrusion (7).

6. Extrudeuse selon la revendication 5, dans laquelle ledit au moins un canal d'injection (22) est conformé de sorte que la distance séparant ledit au moins un orifice de sortie (30) de l'organe d'alimentation (4), en projection sur l'axe longitudinal, est supérieure ou égale à 4D.

7. Extrudeuse (5) selon l'une quelconque des revendications précédentes, dans laquelle ledit au moins canal d'injection (22) comprend au moins un orifice d'entrée (28) formé au niveau d'une extrémité proximale (20) de la vis d'extrusion (7) opposée à l'extrémité distale (21), ledit au moins un canal d'injection (22) s'étendant à l'intérieur de ladite vis d'extrusion (7) entre ledit au moins un orifice d'entrée et ledit au moins un orifice de sortie (30).

8. Extrudeuse (5) selon la revendication 7, dans laquelle ledit au moins un canal d'injection (22) comprend au moins une première portion de canal (34) s'étendant principalement le long de l'axe longitudinal (A) au niveau d'une portion centrale de la vis d'extrusion (7) et au moins une deuxième portion de canal (36) s'étendant transversalement à l'axe longitudinal (A) depuis ladite au moins une première portion de canal (34) et ledit au moins un orifice de sortie (30).

9. Extrudeuse (5) selon l'une des revendications précédentes,dans laquelle ledit au moins un canal d'injection (22) comprend une pluralité d'orifices de sortie (30) réparties autour de la vis d'extrusion (7).

10. Extrudeuse (5) selon la revendication 9, dans laquelle les orifices de sortie (30) sont équirépartis autour de la vis d'extrusion (7).

11. Extrudeuse (5) selon la revendication 9 ou 10, dans laquelle les orifices de sortie (30) sont positionnés dans un même plan perpendiculaire à l'axe longitudinal (A).

12. Extrudeuse (5) selon l'une quelconque des revendications précédentes en combinaison avec les revendications 8 et 9, dans laquelle la pluralité d'orifices de sortie (30) comprend un nombre paire d'orifices de sortie (30), ladite au moins une deuxième portion de canal (36) étant réalisée par un seul perçage s'étendant entre deux orifices de sortie (30) diamétralement opposés.

13. Extrudeuse (5) selon l'une des revendications précédentes,dans laquelle la vis d'extrusion (7) comprend un corps allongé (24) et au moins un filet (26) s'étendant autour et le long dudit corps allongé (24), ledit au moins un orifice de sortie (30) débouchant au niveau d'une surface extérieure du corps allongé (24).

14. Procédé de fabrication d'un câble électrique (11) comprenant au moins un élément électriquement conducteur allongé (12) et au moins une couche thermoplastique (14) extrudée entourant ledit élément électriquement conducteur allongé, ledit procédé mettant en oeuvre une extrudeuse (5) selon l'une des revendications précédentes, **caractérisé en ce qu'**il comprend au moins les étapes suivantes :
i) une étape d'introduction d'une composition comprenant au moins un polymère thermoplastique sous forme solide dans une zone de la vis d'extrusion (7), dénommée zone d'alimentation (9), et située à l'entrée de l'extrudeuse (5),
ii) une étape au cours de laquelle la composition issue de l'étape i) est amenée de la zone d'alimentation (9) vers une ou plusieurs zones intermédiaires (10) de la vis d'extrusion (7) permettant le transport de la composition vers la tête d'extrusion (5) située à la sortie de l'extrudeuse (5) et la fusion graduelle du polymère thermoplastique,
iii) une étape d'application au niveau de la tête de l'extrudeuse (5) de la composition issue de l'étape ii) autour de l'élément électriquement conducteur allongé (12), dans lequel au moins un liquide est injecté entre le fourreau et la vis d'extrusion (7) au travers dudit au moins un canal d'injection (22) formé dans la vis d'extrusion (7).

15. Procédé selon la revendication 14, dans lequel ledit au moins un polymère thermoplastique sous forme solide est choisi parmi un homopolymère de propylène et un copolymère de propylène, le liquide étant un liquide diélectrique.
